# EUROPÄISCHE PATENTANMELDUNG

(11) **EP 2 940 404 A1**
(43) Veröffentlichungstag der Anmeldung: **04.11.2015**
(21) Anmeldenummer: 15165672.5
(22) Anmeldetag: 29.04.2015
(51) Int. Cl.: F24J 3/08

(54) **ERDSONDE UND SONDENFUSS FÜR EINE ERDSONDE**

(30) Priorität: 30.04.2014 DE 202014102027 U
(71) Anmelder: Ledwon, Anton, 53842 Troisdorf (DE)
(72) Erfinder: Knof, Klaus, 48145 Münster (DE)
(74) Vertreter: Albiger, Jonas

(57) **Zusammenfassung**

Die Erfindung betrifft eine Erdsonde (1) zum Austausch von Wärme zwischen einem Erdsondefluid und dem Erdreich, mit einer Einströmvorrichtung (10) und einer Ausströmvorrichtung (20), die an einem unteren Ende der Erdsonde (1) durch einen Verbindungsabschnitt fluidleitend verbunden sind, wobei die Einströmvorrichtung (10) und die Ausströmvorrichtung (20) nebeneinander angeordnet sind. Die Erdsonde zeichnet sich dadurch aus, dass die Einströmvorrichtung (10) ein Volumen aufweist, das mindestens doppelt so groß ist wie ein Volumen der Ausströmvorrichtung (20). Des Weiteren betrifft die Erfindung auch einen Sondenfuß (30), der bevorzugt für die erfindungsgemäße Erdsonde (1) eingesetzt werden kann.

## Beschreibung

Die Erfindung betrifft eine Erdsonde zum Austausch von Wärme zwischen einem Erdsondefluid und dem Erdreich, mit einer Einströmvorrichtung und einer Ausströmvorrichtung, die an einem unteren Ende der Erdsonde durch einen Verbindungsabschnitt fluidleitend verbunden sind. Des Weiteren betrifft die Erfindung einen Sondenfuß für eine solche Erdsonde.

Bei einer U-förmigen Erdsonde weisen die Einströmvorrichtung und die Ausströmvorrichtung jeweils ein Rohr mit gleichem Durchmesser auf, wobei diese Rohre durch den Verbindungsabschnitt miteinander verbunden sind. Üblicherweise wird der Verbindungsabschnitt durch einen Sondenfuß gebildet, in den die Rohre am unteren Ende der Erdsonde münden.

Ein Wasser-Glykol-Gemisch (kurz: Wasser), das üblicherweise als Erdsondefluid verwendet wird, wird dabei zu Heizzwecken mit einer bestimmten Temperatur in das Einströmrohr geleitet. Das Wasser in dem Einströmrohr nimmt dabei auf dem Weg zum unteren Ende der Erdsonde Wärme aus dem Erdreich auf. Nachdem es im Verbindungsabschnitt in das Ausströmrohr geleitet wird, fließt das Wasser nun vom unteren Ende wieder nach oben und nimmt ebenfalls Wärme, wenn auch in einem kleineren Umfang aufgrund des kleineren Temperaturgradienten, aus dem Erdreich auf. Das nun erwärmte Wasser kann einer Wärmepumpe zugeführt werden, die beispielsweise eine Fußbodenheizung speist.

Zudem sind Doppel-U-förmige Erdsonden bekannt, bei denen die Einströmvorrichtung zwei Rohre und die Ausströmvorrichtung ebenfalls zwei Rohre umfassen. Auch hier sind wie bei der U-förmigen Erdsonde die Einströmvorrichtung und die Ausströmvorrichtung nebeneinander angeordnet. Der den Verbindungsabschnitt bildende Sondenfuß verbindet dabei jeweils ein Ausströmrohr mit einem Einströmrohr, so dass zwei voneinander unabhängige Schleifen gegeben sind.

Zudem sind Erdsonden bekannt, die koaxial aufgebaut sind. Aus der DE 10 2010 001 823 A1 ist eine koaxiale Erdsonde bekannt, die ein Innenrohr und ein dazu koaxial angeordnetes Außenrohr aufweist. Das Innenrohr stellt dabei das Ausströmrohr dar. Der ringförmige Raum zwischen Außenrohr und Innenrohr bildet die Einströmvorrichtung. Durch Verwirbelungskörper, die in dem ringförmigen Raum zwischen Innenrohr und Außenrohr angeordnet sind, lässt sich gemäß der DE 10 2010 001 823 A1 der Wärmeübertrag von dem Erdreich auf das Erdsondefluid erhöhen. Jedoch weist die koaxiale Erdsonde mit den Verwirbelungskörpern einen vergleichsweise aufwändigen Aufbau auf. Zudem muss die koaxiale Erdsonde aus einzelnen Rohrstücken vor Ort zusammengesetzt bzw. zusammengeschweißt werden.

Der Erfindung liegt die Aufgabe zu Grunde, eine Erdsonde bereitzustellen, die einfach aufgebaut ist, ohne großen Aufwand vor Ort in das Erdreich eingesetzt werden kann und einen möglichst guten Wirkungsgrad aufweist.

Die der Erfindung zu Grunde liegende Aufgabe wird mit der Merkmalskombination gemäß Anspruch 1 gelöst. Ausführungsbeispiele der Erfindung können den Unteransprüchen entnommen werden.

Die erfindungsgemäße Erdsonde zeichnet sich dadurch aus, dass die Einströmvorrichtung ein Volumen aufweist, das mindestens doppelt so groß ist wie ein Volumen der Ausströmvorrichtung. Vorzugsweise ist das Volumen der Einströmvorrichtung mindestens dreimal oder gar mindestens viermal so groß wie das Volumen der Ausströmvorrichtung. Durch das gegenüber dem Volumen der Ausströmvorrichtung vergrößerte Volumen der Einströmvorrichtung verweilt das Erdsondefluid (im Folgenden wird vereinfachend Bezug genommen auf das Fluid oder auf Wasser als ein mögliches Fluid) länger in der Erdsonde, so dass in der Einströmvorrichtung das Wasser aufgrund der größeren Verweilzeit mehr Wärme aufnehmen kann. Zudem ist es möglich, dass die Erdsonde in einem größeren Umfang als Wärmespeicher eingesetzt werden kann.

In einer Ausführung der Erfindung weist die Einströmvorrichtung einen Strömungsquerschnitt auf, der mindestens doppelt so groß ist wie ein Strömungsquerschnitt der Ausströmvorrichtung. Vorzugsweise ist der Strömungsquerschnitt mindestens dreimal oder gar mindestens viermal so groß wie der Strömungsquerschnitt der Ausströmvorrichtung. In diesem Ausführungsbeispiel wird das größere Volumen der Einströmvorrichtung in erster Linie bzw. ausschließlich durch den größeren Strömungsquerschnitt erreicht. Alternativ oder zusätzlich ist es möglich, dass die Einströmvorrichtung einen längeren Strömungsweg (beispielsweise durch Windungen oder dergleichen) als die Ausströmvorrichtung aufweist.

Die Einströmvorrichtung kann wenigstens ein Einströmrohr umfassen, wobei die Ausströmvorrichtung ein Ausströmrohr umfassen kann. Weist die Einströmvorrichtung lediglich nur ein Einströmrohr auf und weist dieses Einströmrohr die gleiche Länge auf wie das Ausströmrohr, ist ein Innendurchmesser des Einströmrohrs so zu wählen, dass das erfindungsgemäße Verhältnis der Volumina von Einströmvorrichtung und Ausströmvorrichtung (größer gleich 2) realisiert wird. Beispielsweise kann ein Innendurchmesser des einzigen Einströmrohrs größer gleich 70 Millimeter sein, während ein Innendurchmesser des einzigen Ausströmrohrs 40 Millimeter beträgt. Derartige Innendurchmesser würden zu einem Volumenverhältnis von knapp über drei führen.

In einem Ausführungsbeispiel der Erfindung beträgt der Innendurchmesser des Einströmrohrs 90 Millimeter, während das Ausströmrohr einen Innendurchmesser von 40 Millimeter aufweist. In diesem Fall, wieder gleiche Längen der beiden Rohre vorausgesetzt, ergibt sich ein Volumen für die Einströmvorrichtung (bzw. für das Einströmrohr), das ungefähr fünfmal so groß ist wie das Volumen des Ausströmrohrs. An dieser Stelle sei betont, dass erfindungsgemäß die Einströmvorrichtung und die Ausströmvorrichtung nebeneinander angeordnet sind. In der Ausführung, indem die Einströmvorrichtung und die Ausströmvorrichtung durch jeweils ein Rohr gebildet sind, bedeutet dies, dass diese beiden Rohre nicht koaxial, sondern nebeneinander angeordnet sind. Eine Längsachse des Einströmrohrs und einer Längsachse des Ausströmrohrs weisen somit einen Abstand auf. Dieser Abstand ist vorzugsweise größer als die Hälfte der Summe aus einem Außendurchmesser des Einströmrohrs und einem Außendurchmesser des Ausströmrohrs. Einströmrohr und Ausströmrohr sind somit, ohne sich zu überlappen, nebeneinander angeordnet.

Die Einströmvorrichtung kann auch zwei, drei oder mehrere Einströmrohre umfassen. Bei der Ausführung mit drei Einströmrohren können im Querschnitt betrachtet diese drei Rohre in drei benachbarten Quadranten angeordnet sein, während das vorzugsweise einzige Ausströmrohr in einem vierten Quadranten liegt. Somit wird die Verwendung einer an sich bekannten Doppel-U-förmigen Erdsonde für die erfindungsgemäße Erdsonde offenbart, wobei nicht zwei, sondern sondern drei Rohre als Einströmrohre und lediglich eins der vier Rohre als Ausströmrohr genutzt werden.

Die Ausführung mit einem vergrößerten Einströmrohr und dem daneben angeordneten Ausströmrohr hat gegenüber der Doppel-U-förmigen Erdsonde (mit jeweils gleichen Rohrdurchmessern) eine größere effektive Fläche, über die Wärme von außen aus dem Erdreich auf das Fluid übergehen kann. Das heißt, das ein Bohrlochwiderstand der einfachen U-förmigen Erdsonde gemäß der Erfindung geringer ist als der Bohrlochwiderstand der erfindungsgemäßen Doppel-U-förmigen Erdsonde, wobei jeweils gleiche Volumenverhältnisse unterstellt werden. Gegenüber einer Erdsonde mit koaxialen Aufbau, bei der das Innenrohr das Ausströmrohr darstellt, weist die erfindungsgemäße Erdsonde den Vorteil auf, dass das Fluid auch im Ausströmrohr noch Wärme aus dem Erdreich aufnehmen kann. Bei einer koaxialen Erdsonde hingegen ist das Innenrohr, in dem das erwärmte Fluid nach oben strömt, von dem Ringraum zwischen Außenrohr und Innenraum vollständig umgeben.

Der Abstand zwischen der Längsachse des Einströmrohrs und der Längsachse des Ausströmrohrs kann durch einen Abstandshalter definiert sein. Der Abstandshalter kann als separates Teil ausgebildet sein, welches beispielsweise durch Rastmittel an den Rohren befestigt wird (zum Beispiel geclipst wird). In einer anderen Ausführung ist der Abstandshalter einstückig an dem Einströmrohr und/oder dem Ausströmrohr angeformt.

Die Ausströmvorrichtung und/oder die Einströmvorrichtung können von einer Haspel abwickelbar sein. Dies hat den Vorteil, dass vor Ort, also dort, wo die Erdsonde in das Erdreich eingesetzt wird, die Ausströmvorrichtung und/oder die Einströmvorrichtung auch in der erforderlichen Länge von beispielsweise mehr als 20 oder 50 m zwar gewickelt, aber als ganzes Stück schon vorliegt. Ein mit einem gewissen Aufwand verbundenes Zusammensetzen oder Zusammenschweißen von einzelnen Rohrstücken kann somit vermieden werden. Unter einer Haspel wird hier eine Rolle mit einem Außendurchmesser kleiner als 1,8 Meter, vorzugsweise kleiner als 1,5 Meter verstanden, auf die beispielsweise die Einströmvorrichtung in Form eines Einströmrohrs auf- bzw. abgewickelt werden kann.

Die Einströmvorrichtung kann Verwirbelungskörper für das durchströmende Fluid aufweisen. Alternativ oder zusätzlich weist die Ausströmvorrichtung Verwirbelungskörper auf. Die Verwirbelungskörper können durch einen separaten Einsatz gebildet sein, der in die Einströmvorrichtung bzw. die Ausströmvorrichtung eingesetzt wird. Wie beispielsweise das Einströmrohr lässt sich bevorzugt dieser Einsatz ebenfalls auf einer Haspel aufwickeln bzw. von ihr abwickeln. Der Einsatz kann auch erst vor Ort in das Einströmrohr (oder das Ausströmrohr) eingeschoben werden. Die Verwirbelungskörper können beispielsweise auch einstückig an der Innenwandung eines Rohrs ausgebildet sein.

Die Innenwandung und/oder die Außenwandung der Einströmvorrichtung können aufgeraut sein. Eine raue Innenwandung sorgt für ein größeres Turbulenzniveau des durch die Einströmvorrichtung fließenden Fluids. Eine raue Außenwandung sorgt für eine bessere Verbindung zwischen der Einströmvorrichtung und einer Zementsuspension, mit der der Zwischenraum zwischen Bohrloch und darin eingesetzter Erdsonde üblicherweise aufgefüllt wird. Durch besagte bessere Verbindung kann die Entstehung von unerwünschten Spalten zwischen Erdsonde und der ausgehärteten Zementsuspension verringert werden. Ein arithmetischer Mittenrauwert Rₐ der Innenwandung kann größer sein als 0,1 mm, 0,5 mm oder 1 mm. Die Ausführungen zur Rauheit der Einströmvorrichtung sollen sinngemäß auch für die Ausströmvorrichtung gelten können.

Eine weitere Aufgabe der Erfindung besteht darin, einen einfach aufgebauten Sondenfuß für eine Erdsonde, insbesondere für eine Erdsonde gemäß der obigen Ausführungen, bereit zu stellen.

Der erfindungsgemäße Sondenfuß weist dabei ein Fußgehäuse mit mindestens vier Anschlüssen auf, wobei an jedem Anschluss ein Einströmrohr oder ein Ausströmrohr befestigt werden kann. Das Fußgehäuse begrenzt dabei einen Innenraum, der mit allen Anschlüssen fluidleitend verbunden ist. Beispielsweise kann der Sondenfuß für eine wie oben beschriebene Erdsonde mit vier Rohren verwendet werden, die jeweils in vier benachbarten Quadranten angeordnet sind. Der erfindungsgemäße Sondenfuß weist dabei den Vorteil auf, dass er sowohl für eine Erdsonde mit zwei Einströmrohren und zwei Ausströmrohren als auch für eine Erdsonde mit drei Einströmrohren und einem Ausströmrohr eingesetzt werden kann. Durch den gemeinsamen Innenraum des Sondenfußes, in den alle Anschlüsse oder Rohre der Erdsonde münden, stehen alle Rohre der Erdsonde miteinander in Verbindung. Die Festlegung, ob es sich bei einem Rohr der Erdsonde um ein Einströmrohr oder ein Ausströmrohr handelt, erfolgt durch die Verschaltung der Rohre an einem Sondenkopf, also oberirdisch, und ist nicht durch den Sondenfuß eingeschränkt.

Vorzugsweise weist das Fußgehäuse des Sondenfußes einen oberen Deckel mit mindestens vier Öffnungen auf. Bei dem oberen Deckel kann es sich dabei um ein separates Bauteil handeln, es kann aber auch einstückig an anderen Gehäuseteilen des Fußgehäuses angeformt sein. In einer Ausführung ist das gesamte Fußgehäuse einstückig ausgebildet. Jeder Öffnung im Deckel kann ein Anschluss zugeordnet werden. Der Deckel kann flach oder auch gewölbt ausgebildet sein.

Der obere Deckel kann eine Zentralöffnung und mehrere Satellitenöffnungen aufweisen, die um die Zentralöffnung herum angeordnet sind. Beispielsweise sind acht oder neun kreisrunde Satellitenöffnungen vorgesehen, deren Mittelachsen sich vorzugsweise auf einem zur Zentralöffnung konzentrischen Kreis befinden. Ein Durchmesser der Zentralöffnung kann größer sein als ein Durchmesser einer Satellitenöffnung. Vorzugsweise sind die Durchmesser aller Satellitenöffnungen gleich groß. In einem Ausführungsbeispiel betragen der Durchmesser für die Zentralöffnung 32 bis 62 mm (vorzugsweise 40 oder 50 mm) und der Durchmesser der einzelnen Satellitenöffnungen 25 bis 40 mm (vorzugsweise 32 oder 40 mm). Die hier angegebenen Durchmesser sollen allgemein für Öffnungen gelten, unabhängig von der hier beschriebenen Anordnung mit einer Zentralöffnung und den darum angeordneten Satellitenöffnungen.

Zumindest einer der Anschlüsse kann ein Rohrstück umfassen, das an dem Deckel befestigt ist. Das Rohrstück ist dabei vorzugsweise so ausgelegt, dass ein Rohr der Erdsonde darauf gesteckt werden kann. Das Rohrstück kann an dem Deckel geklebt, geschweißt oder in anderer Weise befestigt sein. In einem Ausführungsbeispiel ist das Rohrstück integraler Bestandteil des Deckels.

Wie oben bereits beschrieben, setzt der Sondenfuß bei einer Erdsonde mit mindestens vier Rohren hinsichtlich der Frage, wieviele Rohre als Einströmrohre oder als Ausströmrohre verwendet werden, keine Grenzen. Durch die Druckverhältnisse an den Anschlüssen des Sondenfußes, die alle in den gemeinsamen Innenraum des Sondenfußes münden, ergeben sich die entsprechenden Durchflussrichtungen durch den Innenraum des Sondenfußes.

Anhand von in den Figuren dargestellten Ausführungsbeispielen soll die Erfindung näher erläutert werden. Es zeigen:
- Figur 1: schematisch im Längsschnitt eine Erdsonde;
- Figur 2: im Querschnitt die Erdsonde der Figur 1;
- Figur 3: im Querschnitt ein weiteres Ausführungsbeispiel für eine Erdsonde;
- Figur 4: ein Sondenfuß von oben, und
- Figur 5: den Sondenfuß der Figur 4 im Längsschnitt

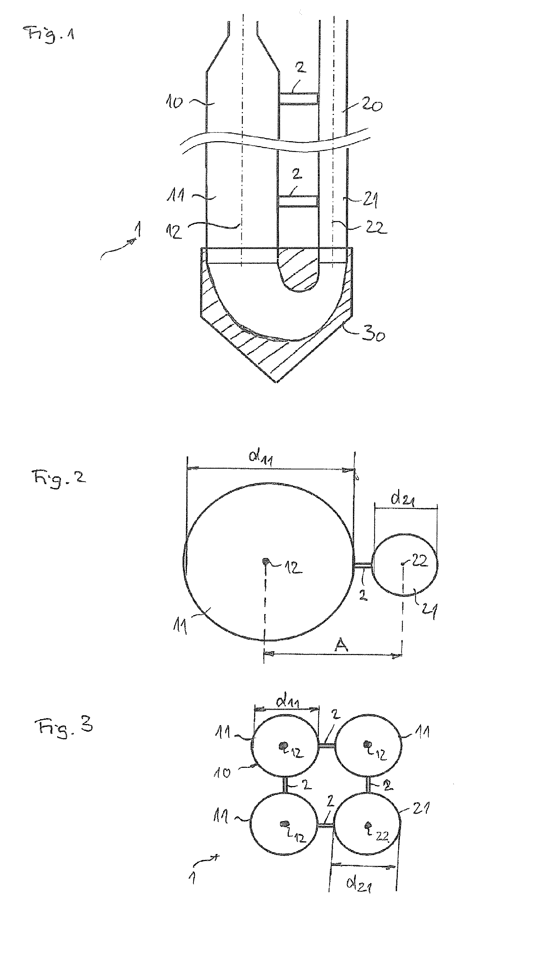

Figur 1 gezeigt im Längsschnitt eine Erdsonde, die in ihrer Gesamtheit mit 1 bezeichnet wird. Die Erdsonde 1 weist eine Einströmvorrichtung 10 und eine Ausströmvorrichtung 20 sowie einen Sondenfuß 30 auf.

Im Ausführungsbeispiel der Figur 1 (siehe auch Figur 2, wobei einzelne Maße nicht maßstabsgetreu sind) weist die Einströmvorrichtung 10 ein Einströmrohr 11 auf, das einen Innendurchmesser d₁₁ aufweist. Die Ausströmvorrichtung 20 weist ein Ausströmrohr 21 auf, das einen Innendurchmesser d₂₁ aufweist. Ein Abstand zwischen einer Längsachse bzw. Mittelachse 12 des Einströmrohrs 11 und einer Längsachse 22 des Ausströmrohrs 21 ist mit A gekennzeichnet. Durch einen Abstandshalter 2 bzw. durch mehrere Abstandshalter 2 (siehe Figur 2) sind die Rohre 11, 21 miteinander verbunden.

Figur 3 zeigt ein weiteres Ausführungsbeispiel für die Erdsonde 1. Bauteile, die gleich oder ähnlich zu denen der Figuren 1 und 2 sind, weisen die gleichen Bezugszeichen auf. Die Einströmvorrichtung weist hier drei parallel geführte Einströmrohre 11 auf. Der Innendurchmesser d₁₁ eines Einströmrohrs 11 entspricht dabei dem Innendurchmesser d₂₁ des Ausströmrohrs 21. Die drei Einströmrohre 11 und das einzige Ausströmrohr 21 sind hier im Quadrat angeordnet, das heißt, dass ihre Mittelachsen 12, 22 die Ecken eines Quadrat bilden. Abstandshalter 2 halten die vier Rohre der Erdsonde 1 in Position. Beispielsweise könnten in der Darstellung der Figur 3 die beiden oberen Rohre (Einströmrohre 11, 11) vor dem Einsetzen der Erdsonde auf einer Haspel aufgewickelt sein, wobei der dazwischen liegende Abstandshalter 2 einstückig an den Rohren 11, 11 angeformt sein kann. Es handelt sich somit um ein Doppelrohr, das kontinuierlich im Extrusionsverfahren kostengünstig hergestellt werden kann. Das Gleiche könnte für die beiden unteren Rohre (Einströmrohr 11 und Ausströmrohr 21) gelten. Die beiden in der Darstellung der Figur 3 vertikal stehenden Abstandshalter 2, 2 können vor Ort an die Doppelrohre angeclipst werden.

Der Sondenfuß für das Ausführungsbeispiel der Figur 3 ist nicht gesondert dargestellt. Dieser Sondenfuß ist jedoch so ausgebildet, dass die drei Einströmrohre 11 vereint werden und fluidleitend übergehen in das Ausströmrohr 22. Im Ausführungsbeispiel der Figur 1 ist schematisch ein solcher Übergang von dem hier einzigen Einströmrohr 11 zu dem Ausströmrohr 21 dargestellt.

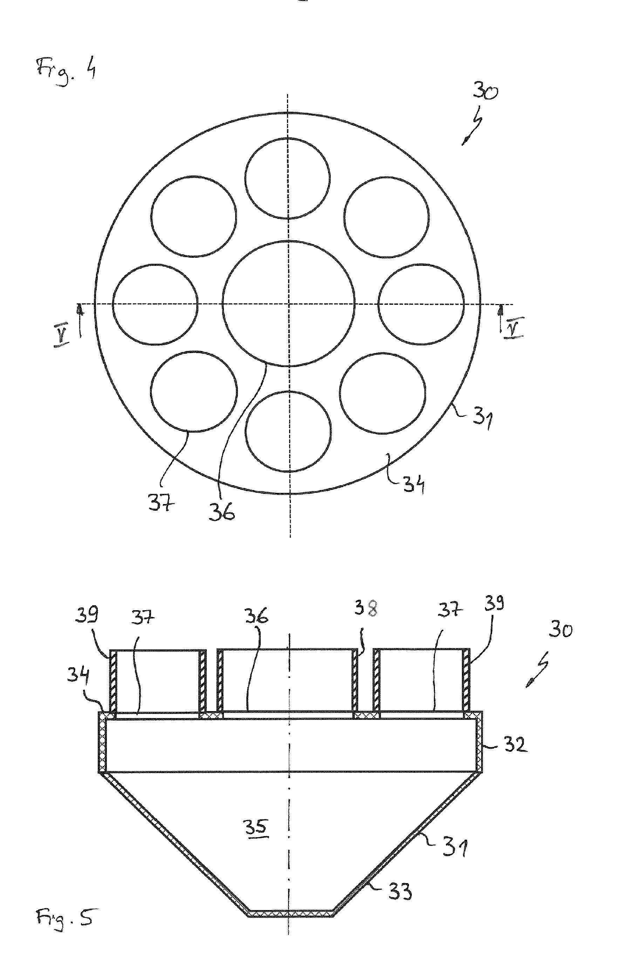

Die Figuren 4 und 5 zeigen einen Sondenfuß 30 mit einem Fußgehäuse 31. Figur 5 ist eine Schnittzeichnung entlang der Linie V-V in Figur 4. Das Fußgehäuse 31 weist einen zylinderförmigen Teil 32 und einen konischen Teil 33 (als Kegelstumpf ausgebildet) auf. Ein kreisrunder Deckel 34 bildet eine Stirnfläche des zylinderförmigen Teils 32 und begrenzt gemeinsam mit den Gehäuseteilen 32, 33 einen Innenraum 35.

In dem Deckel 34 sind eine kreisrunde Zentralöffnung 36 und acht kreisrunde Satellitenöffnungen 37 vorgesehen. Die Satellitenöffnungen 37 mit ihren jeweiligen Mittelachsen liegen auf einem Kreis, der konzentrisch zur Zentralöffnung 36 angeordnet ist. Konzentrisch zur Zentralöffnung ist an dem Deckel 34 ein Rohrstück 38 befestigt. Das Rohrstück 38 dient dazu, ein Einlassrohr oder ein Auslassrohr der Erdsonde an dem Sondenfuß 30 zu befestigen. In analoger Weise wie bei der Zentralöffnung 36 lässt sich jeder Satellitenöffnung 37 ein entsprechendes Rohrstück 39 zuordnen.

Die Anzahl der Öffnungen im Fußgehäuse bzw. die Anzahl der Anschlüsse, die Anordnung der Öffnungen/Anschlüsse sowie deren Größe und Form können frei gewählt werden. Beispielsweise können eine Zentralöffnung und vier, fünf, sechs etc. Satellitenöffnungen vorgesehen sein. Auch können die Öffnungen beliebig angeordnet sein (beispielsweise in einer 3x3-Matrix oder in einer 3x4-Matrix). Der Querschnitt der Öffnungen/Anschlüsse kann von einem Kreis abweichen, beispielsweise kann der Strömungsquerschnitt mehreckig oder elliptisch sein. Alle Öffnungen/Anschlüsse können eine gleiche Querschnittsfläche aufweisen, es ist aber auch denkbar, dass nur ein Teil der Öffnungen/Anschlüsse eine gleiche Querschnittsfläche aufweisen.

Eine Erdsonde mit dem Sondenfuß 30 der Figuren 4 und 5 kann beispielsweise wie folgt betrieben werden. Die Satellitenöffnungen 37 sind jeweils mit (Satelliten-)Rohren verbunden, in die am Sondenkopf der Erdsonde das Erdsondefluid (kurz: Fluid) gedrückt wird. Diese Satellitenrohre fungieren somit als Einströmrohre. Bedingt durch die Druckverhältnisse wird das Fluid aus den Satellitenrohren durch den Sondenfuß 30 in ein (Zentral-)Rohr gedrückt, welches mit der Zentralöffnung 36 verbunden ist. Das Zentralrohr stellt somit das Ausströmrohr dar. Stellt sich heraus, dass eine solche Verschaltung am Sondenkopf (in alle Satellitenrohre wird das zu erwärmende Fluid gedrückt, das durch das Zentralrohr wieder zurückgeführt wird) zu hohen Druckverlusten führt oder mit anderen Nachteilen verbunden ist, können beispielsweise ein oder zwei Satellitenrohre ebenfalls als Ausströmrohre verwendet werden. Es ist dazu lediglich notwendig, am Sondenkopf die entsprechenden Satellitenrohre von der Zufuhr des Fluids abzukoppeln und diese mit dem Zentralrohr parallel zu schalten, sodass sie dann wie das Zentralrohr das erwärmte und schon durch den Sondenfuß geleitete Fluid führen.

Somit ist ein Verfahren zur Inbetriebnahme einer Erdsonde offenbart, die wenigstens vier Rohre aufweist, die sich zwischen einem Sondenkopf und einem Sondenfuß erstrecken, wobei der Sondenfuß nach einem der Ansprüche 11 bis 14 ausgeführt ist, wobei die Festlegung, welches Rohr oder welche Rohre als Einströmrohr bzw. Einströmrohre und welches Rohr oder welche Rohre als Ausströmrohr bzw. Ausströmrohre verwendet werden, auch erfolgen kann, wenn die Erdsonde bereits ins Erdreich eingesetzt ist und sich der Sondenfuß in seiner Einsatzlage befindet. Bei der Festlegung können dann Messungen und Erkenntnisse vor Ort berücksichtigt werden.

## Patentansprüche

1. Erdsonde (1) zum Austausch von Wärme zwischen einem Erdsondefluid und dem Erdreich, mit einer Einströmvorrichtung (10) und einer Ausströmvorrichtung (20), die an einem unteren Ende der Erdsonde (1) durch einen Verbindungsabschnitt fluidleitend verbunden sind, wobei die Einströmvorrichtung (10) und die Ausströmvorrichtung (20) nebeneinander angeordnet sind, **dadurch gekennzeichnet, dass** die Einströmvorrichtung (10) ein Volumen aufweist, das mindestens doppelt so groß ist wie ein Volumen der Ausströmvorrichtung (20).

2. Erdsonde (1) nach Anspruch 1, **dadurch gekennzeichnet, dass** die Einströmvorrichtung (10) einen Strömungsquerschnitt aufweist, der mindestens doppelt so groß ist wie ein Strömungsquerschnitt der Ausströmvorrichtung (20).

3. Erdsonde (1) nach Anspruch 1 oder 2, **dadurch gekennzeichnet, dass** die Einströmvorrichtung wenigstens ein Einströmrohr (11) umfasst und dass die Ausströmvorrichtung ein Ausströmrohr (21) umfasst.

4. Erdsonde (1) nach Anspruch 3, **dadurch gekennzeichnet, dass** die Einströmvorrichtung (10) drei Einströmrohre (11) umfasst, wobei im Querschnitt betrachtet die drei Einströmrohre (11) in drei benachbarten Quadranten und das Ausströmrohr (21) in einem vierten Quadranten angeordnet sind

5. Erdsonde (1) nach Anspruch 3 oder 4, **dadurch gekennzeichnet, dass** ein Abstand (A) zwischen einer Längsachse (12) des Einströmrohrs (11) und einer Längsache (22) des Ausströmrohrs (21) durch einen Abstandshalter (2) definiert ist.

6. Erdsonde (1) nach Anspruch 5, **dadurch gekennzeichnet, dass** der Abstandshalter (2) einstückig an dem Einströmrohr (11) und/oder dem Ausströmrohr (21) angeformt ist.

7. Erdsonde (1) nach einem der Ansprüche 1 bis 6, **dadurch gekennzeichnet, dass** die Ausströmvorrichtung und/oder die Einströmvorrichtung (20) von einer Haspel abwickelbar ist.

8. Erdsonde (1) nach einem der Ansprüche 1 bis 7, **dadurch gekennzeichnet, dass** die Einströmvorrichtung (10) und/oder die Ausströmvorrichtung (20) Verwirbelungskörper für das Erdsondefluid aufweist.

9. Erdsonde (1) nach Anspruch 8, **dadurch gekennzeichnet, dass** die Verwirbelungskörper durch einen separaten Einsatz gebildet sind, der in die Einströmvorrichtung (10) bzw. die Ausströmvorrichtung (20) eingesetzt ist.

10. Erdsonde (1) nach einem der Ansprüche 1 bis 9, **dadurch gekennzeichnet, dass** eine Innenwandung und/oder eine Außenwandung der Einströmvorrichtung aufgeraut ist.

11. Sondenfuß (30) für eine Erdsonde (1), insbesondere für eine Erdsonde nach einem der Ansprüche 1 bis 10, mit einem Fußgehäuse und mit mindestens vier Anschlüssen, wobei an jedem Anschluss ein Einströmrohr oder ein Ausströmrohr der Erdsonde befestigbar ist, **dadurch gekennzeichnet, dass** das Fußgehäuse einen Innenraum begrenzt, der mit allen Anschlüssen fluidleitend verbunden ist.

12. Sondenfuß (30) nach Anspruch 11, **dadurch gekennzeichnet, dass** das Fußgehäuse eine oberen Deckel mit mindestens vier Öffnungen aufweist.

13. Sondenfuß (30) nach Anspruch 12, **dadurch gekennzeichnet, dass** der obere Deckel eine Zentralöffnung und mehrere Satellitenöffnungen aufweist, die um die Zentralöffnung herum angeordnet sind.

14. Sondenfuß (30) nach Anspruch 12 oder 13, **dadurch gekennzeichnet, dass** zumindest einer der Anschlüsse ein Rohrstück umfasst, das an dem Deckel befestigt ist und um das oder in das ein Einströmrohr oder ein Ausströmrohr gesteckt werden kann.
